(19) Europäisches Patentamt / European Patent Office / Office européen des brevets

(11) **EP 4 249 902 B1**

(12) **EUROPEAN PATENT SPECIFICATION**

(45) Date of publication and mention
of the grant of the patent:
**28.08.2024 Bulletin 2024/35**

(51) International Patent Classification (IPC):
***G01N 23/20*** (2018.01)

(52) Cooperative Patent Classification (CPC):
**G01N 23/20**

(21) Application number: **22163328.2**

(22) Date of filing: **21.03.2022**

(54) **METHOD FOR DETERMINING AN ELEMENT CONCENTRATION OF AN EDS/WDS SPECTRUM OF AN UNKNOWN SAMPLE AND A CORRESPONDING DEVICE**

VERFAHREN ZUR BESTIMMUNG EINER ELEMENTKONZENTRATION EINES EDS-/WDS-SPEKTRUMS EINER UNBEKANNTEN PROBE UND ENTSPRECHENDE VORRICHTUNG

PROCÉDÉ DE DÉTERMINATION DE LA CONCENTRATION D'UN ÉLÉMENT À PARTIR D'UN SPECTRE EDS/WDS D'UN ÉCHANTILLON INCONNU ET DISPOSITIF CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2023 Bulletin 2023/39**

(73) Proprietor: **Bruker Nano GmbH**
**12489 Berlin (DE)**

(72) Inventor: **Terborg, Ralf**
**10317 Berlin (DE)**

(74) Representative: **Gulde & Partner**
**Patent- und Rechtsanwaltskanzlei mbB**
**Wallstraße 58/59**
**10179 Berlin (DE)**

(56) References cited:
**CN-A- 113 092 514**

• NEWBURY DALE E: "STANDARDLESS QUANTITATIVE ELECTRON-EXCITED X-RAY MICROANALYSIS BY ENERGY-DISPERSIVE SPECTROMETRY: WHAT IS ITS PROPER ROLE?", MICROSCOPY AND MICROANALYSIS,, vol. 4, no. 6, November 1998 (1998-11-01), pages 585 - 597, XP009073154, ISSN: 1431-9276

• NEWBURY DALE E ET AL: ""Standardless" Quantitative Electron Probe Microanalysis with Energy-Dispersive X-ray Spectrometry: Is It Worth the Risk?", ANALYTICAL CHEMISTRY (WASHINGTON), June 1995 (1995-06-01), Washington, DC, pages 1866 - 1871, XP055949391, Retrieved from the Internet <URL:https://pubs.acs.org/doi/pdf/10.1021/ac00107a017> [retrieved on 20220805], DOI: 10.1021/ac00107a017

• DUNN TODD: "MZAF: A BASIC program for off-line correction of electron microprobe data by the ZAF method", COMPUTERS & GEOSCIENCES, vol. 15, no. 1, 1989, AMSTERDAM, NL, pages 9 - 17, XP055949377, ISSN: 0098-3004, DOI: 10.1016/0098-3004(89)90052-6

• EGGERT FRANK: "Effect of the Silicon Drift Detector on EDAX Standardless Quant Methods", MICROSCOPY TODAY, vol. 28, no. 2, March 2020 (2020-03-01), US, pages 34 - 39, XP055949366, ISSN: 1551-9295, Retrieved from the Internet <URL:https://www.cambridge.org/core/services/aop-cambridge-core/content/view/4CC402A98BD07792934F6DE2711EE764/S1551929519001196a.pdf/effect-of-the-silicon-drift-detector-on-edax-standardless-quant-methods.pdf> DOI: 10.1017/S1551929519001196

- CARPENTER P.K.: "Guidelines for Microanalysis Using the Energy-dispersive Spectrometer", MICROSCOPY AND MICROANALYSIS, vol. 19, no. S2, August 2013 (2013-08-01), pages 2020 - 2021, XP055949385, ISSN: 1431-9276, Retrieved from the Internet <URL:https://www.cambridge.org/core/services/aop-cambridge-core/content/view/CE202AED5695B9ABA8C2686326D488B4/S1431927613012099a.pdf/guidelines-for-microanalysis-using-the-energy-dispersive-spectrometer.pdf> DOI: 10.1017/S1431927613012099

**Description**

**Field of the Invention**

The present invention relates to a method and a device for determining an element composition of an unknown sample using an EDS/WDS spectrum of the unknown sample. Further, a spectroscopic system for obtaining an EDS/WDS spectrum of the unknown sample is provided.

**Technological Background**

From the state of the art it is known that primary particles, e.g. electrons or X-ray photons, interact with a sample that is to be investigated and generate various secondary particles or signals, preferably X-ray photons, which are emitted by the sample in response to the incident primary particles. These secondary particles can be detected by an X-ray detector to record a characteristic spectrum of the sample. The photons entering the detector can be analysed with respect to their energy or wavelength and summarized in the spectrum. These methods are referred as energy dispersive spectrometry (EDS) or wavelength dispersive spectrometry (WDS).

The recorded spectrum includes among other specific features element-specific characteristic peaks and the intensities encode information which can be used to determine the composition of the sample in terms of the relative concentrations.

Various quantification algorithms exist for the evaluation of the concentrations of the sample. According to a general description the line intensity $I_{jk}$ (number of photons) of *line j* of element *k* in a certain solid angle of detection of a certain element k can be calculated with the following equation:

$$I_{jk} = c_k n \frac{\Omega}{4\pi} \varepsilon_j \omega_{jk} p_{jk} (1 + f_c + f_b) f(\chi) \frac{N}{A_k} R \int_{E_0}^{E_{jk}} \frac{Q_{jk}(E)}{dE/d\rho s} dE$$

The quantities used in this formula are:

$c_k$: mass fraction of element *k*,

$n$: the number of primary electrons,

$\Omega$: solid angle of detection,

$\varepsilon_j$: quantum efficiency of the detector at energy of line *j,*

$\omega_{jk}$: fluorescence yield of line *j* of element *k*,

$p_{jk}$: relative line intensity of line *j* of element *k*,

$f_c$: relative intensity contribution due to secondary characteristic fluorescence excited by all other elements,

$f_b$: relative intensity contribution due to fluorescence by the bremsstrahlung continuum,

$f(\chi)$: absorption correction factor: the fraction of radiation of line *j* of element *k* which is not absorbed inside the sample because of the mass absorption coefficient,

$N$: Avogadro's number,

$A_k$: atomic mass of element *k*

$R$: backscattering factor,

$E_0$: energy of the primary electrons,

$E_{jk}$: critical energy of line *j* of element *k*,

$Q_{jk}$: ionization cross section of line $j$ of element $k$, and

$dE/d\rho s$: energy loss of the electron per electron path in mass length.

The term $F=(1+f_c+f_b)$ is referred to in the literature as the fluorescence correction, $f(\chi)$ is referred to as the absorption correction A and the part containing the integral is referred to as the atomic number correction Z. The intensity of element k can be factorized as it is known by:

$$I_{jk} \propto c_k ZAF,$$

Several methods have been developed to determine the correction factors Z, A, F of an element k which depends on the other elements and their concentrations.

For example, for an unknown sample a first composition (containing elements and their mass concentrations) can be assumed/guessed and the concentrations are iteratively changed until the calculated intensities sufficiently match the measured intensities. This quantification is referred to as standardless.

Also, standard or reference samples of known composition can be used which were measured under the same conditions. The spectrum of the unknown sample can then be evaluated using the spectrum of the standard sample by

$$\frac{I_{jk,u}}{I_{jk,s}} = \frac{c_{u,k} Z_{u,k} A_{u,k} F_{u,k}}{c_{s,k} Z_{s,k} A_{s,k} F_{s,k}},$$

wherein $I_{jk,u}$ is the intensity of the unknown, $I_{jk,s}$ being the intensity of the standard and Z, A, F being the correction factors of the element of the unknown and the standard sample. Such examples can be found in the introduction of the article of Newbury Dale E: "Standardless Quantitative electron-excited X-Ray Microanalysis by energy-dispersive spectrometry: What is its proper role?", Microscopy and Microanalysis, vol. 4, no. 6, November 1998 (1998-11), pages 585-597, XP009073154, ISSN: 1431-9276 in which a multielement standard with a very similar composition is used to determine the composition of the unknown sample.

A database can be created in which at least one standard sample is stored for each element to be analysed. If several standards are available for an element, one can manually select a suitable standard sample. However, manual selection is necessary for all currently used software packages and thus relies on the user's experience.

It is thus an object of the present invention to overcome or reduce at least some of the drawbacks of the prior art and to provide a method determining an element concentration of an EDS/WDS spectrum with improved accuracy. Further problems solved by the present invention become more apparent in the following description.

The above information and definitions disclosed in this background section serve only for enhancement of understanding and may contain information that does not form the prior art that is already known to the skilled person. In particular, the information provided therein may be referred to for the understanding of the following description.

## Summary of Invention

Embodiments of the present disclosure seek to solve at least one of the problems existing in the prior art to at least some extent.

According to the invention, a method for determining an element concentration of an EDS/WDS spectrum of an unknown sample is provided according to claim 1. The method comprises to perform a preliminary quantification of the EDS/WDS spectrum of the unknown sample and identify a plurality of elements in the unknown sample. The method further comprises to identify a set of pre-stored standard samples including the plurality of elements. The method further comprises to determine, for each element of the plurality of elements, a similarity score for the corresponding element in each identified standard sample. In a further step, the method comprises the step of selecting, for each element of the plurality of elements, the one standard sample among the set of standard samples by using the determined similarity score and identify the concentration of the corresponding element in the selected standard sample. The method includes then to perform quantification of the EDS/WDS spectrum of the unknown sample by using, for each element of the plurality of elements, the identified concentration of the respectively selected standard sample.

The similarity score is in other words a quality score or simply a score. The similarity score is element-wise, i.e. for each element an individual score is determined. The similarity score is an element-wise measure which quantifies the similarity of the samples in terms of this element. The similarity score may be determined in many ways using different criteria or combinations of criteria to implement an element-wise selection of standards. The identified standard samples may for example be steel samples when the unknown sample is a steel. Other standards may be minerals, glasses, organic samples, semiconductor samples, but the invention is not restricted thereto. The concentrations may be mass fractions or mass concentrations with respect to the total mass of the sample. EDS/WDS refers to energy dispersive and wavelength dispersive spectroscopy. The quantification process may comprise an iteration in which the concentrations of the selected standard for each element are used as initialization input until a termination condition is met.

A technical advantage is that from a set of identified standards an optimal standard for each element, i.e. element-wise, can be automatically identified by using the score value so that optimized concentrations are input for the quantification process. Thus, the accuracy of the quantification results can be improved. The algorithm/iteration to reach the quantification results, i.e. each of the concentrations, does not have to rely on a particular standard but selects element-wise the optimal standard according to the determined score.

Preferably, the step of determining the similarity score comprises the step of determining at least one among an atomic number correction factor $Z_{u,k}$, an absorption correction factor $A_{u,k}$ and a fluorescence correction factor $F_{u,k}$ for each element of the plurality of elements of the preliminarily quantified unknown sample. The method further comprises to determine/identify the same one among the atomic number correction factor $Z_{s,k}$, the absorption correction factor $A_{s,k}$ and the fluorescence correction factor $F_{s,k}$, for each element of the plurality of elements of the identified standards. Further, the method may comprise the step of calculating, for each element, a square deviation between the determined correction factor of the element of the unknown sample and the corresponding one of the standard sample. The correction factors for the elements in the standard may be pre-known, i.e. pre-stored in the storage or previously calculated by methods known to the skilled person. The correction factors depend on the concentrations of all elements and are thus a suitable measure. When the standards are similar in elemental composition, then the correction factors Z, A and F are similar. The developed square deviations measure has the advantage that corrections cannot cancel out in contrast to the matrix corrections being a product of the correction factors. In this sense, a superior measure is provided to improve the selection process and the quantification result. When the square deviation is small this refers to small deviation of the corresponding standard sample, i.e. in other words the lowest score is the best score.

Preferably, the step of determining the similarity score may comprise calculating a sum of square deviations between the respective correction factors $Z_{u,k}$, $A_{u,k}$ and $F_{u,k}$ of the element of the unknown sample and the respective correction factors $Z_{s,k}$, $A_{s,k}$ and $F_{s,k}$ of the corresponding element of the standard sample. This score has the advantage that a compensation of the correction factors is prevented due to the squared deviations which sum up and cannot cancel out. Thus, the score provides accurate information on element-wise similarity between elements of unknown sample and the standard sample so that quantification input is more accurate.

Preferably, the step of determining of the similarity score may further include using the concentration of the element in the standard sample. The insight is that the extrapolation/iteration of small concentrations in the standard to larger concentration is less reliable than the extrapolation from larger concentration to smaller ones. Additionally, the statistical error of the peak in the spectrum is smaller for larger concentrations.

In a preferred embodiment, the step of determining of the similarity score may further include calculating a term $\log(c_{s,k})$ and subtracting the term from the calculated square deviation, wherein $0 < c_{s,k} < 1$ corresponds to the concentration of the element in the standard sample. This penalty term refers to that extrapolation/iteration of small concentrations in the standard to larger concentration is less reliable and that the statistical error of the peak in the spectrum is smaller for larger concentrations. Very small concentrations in the sample will thus lead to an increase of the score value to indicate less similarity and thus to favor a different standard for such element in which a higher concentration of this element is included.

In a preferred embodiment, the step of determining of the similarity score includes setting a relative weight between the calculated term $\log(c_{s,k})$ and the calculated square deviation. This allows to control the importance/influence of each contribution to the similarity score. Such weights can be set in advance.

In a preferred embodiment, the determining of the similarity score includes calculating the term:

$$S = w_1 \cdot [(Z_{u,k} - Z_{s,k})^2 + (A_{u,k} - A_{s,k})^2 + (F_{u,k} - F_{s,k})^2] - w_2 \cdot \log c_{s,k},$$

wherein $w_1 > 0$ refers to a preset first weight factor, $w_2 > 0$ refers to a preset second weight factor. These factors can also be initially set to 1, for example in a first approach, and then be refined. This particularly developed formula allows to control the importance of each contribution to a total score. No correction factors can cancel out with each other and thus a particularly accurate selection score to select the identified standards for each element is provided. The weight factors can further be used to assure that the concentration sum is within a threshold around 100%.

The method may further comprise, after the step of quantification of the EDS/WDS spectrum of the unknown sample, the step of determining the sum of concentrations of the elements of the quantification result, and accept the quantification result, when the sum of concentrations is within a threshold interval around 100% or 1. Thus, the method provides an acceptance criterion to ensure the quality of the quantification outcome.

The method may further comprise to repeat, for adjusted weights, the steps of determining the similarity score, selecting the standards for each element and performing the quantification with the identified concentrations, when the sum of concentrations is not within a threshold interval around 100% or 1, until the sum of concentrations of the elements of the quantification result lies within the threshold interval around 100% or 1. The weight factors thus allow a recurrence to ensure an accurate quantification result of the concentrations. Threshold interval may for example be selected to be [98, 102] in percentage or normalized [0.98, 1.02], respectively.

Preferably, the step of performing the preliminary quantification includes a standardless quantification in which concentrations are chosen and iterated to reach the preliminary quantification of the EDS/WDS spectrum of the unknown sample. Such preliminary quantification is particularly fast und requires less computation time since the initial quantification is assumed/guessed.

In a preferred embodiment, the step of performing the preliminary quantification includes a standard quantification in which concentrations according a standard sample among standards is selected and iterated to reach the preliminary quantification of the EDS/WDS spectrum of the unknown sample. This leads to an improved accuracy of the preliminarily quantified unknown sample.

The step of performing the quantification may comprise the step of performing an iteration scheme initialized by the concentrations of the selected standard for each element until a termination condition is met.

Another aspect of the present invention includes a computer program comprising instructions which, when the computer program is executed by a computer, cause the computer to carry out the method as described above. The advantages are identical compared to the method above.

A further aspect of the invention is directed to a device for determining an element concentration of an EDS/WDS spectrum of an unknown sample, comprising at least one processor operatively connected to a storage, wherein the at least one processor is configured to perform the method as described above. The advantages are identical compared to the method above.

In a further aspect of the present invention a system for obtaining an EDS/WDS spectrum of an unknown sample, the apparatus including a device according to the above embodiment. The advantages are identical compared to the method above.

Further aspects of the present invention could be learned from the following description.

The electronic or electric devices and/or any other relevant devices or components according to embodiments of the present invention described herein may be implemented utilizing any suitable hardware, firmware, or an application-specific integrated circuit, software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Brief Description of the Drawings

Features will become apparent to those of ordinary skill in the art by describing in detail exemplary embodiments with reference to the attached drawings in which:

Fig. 1    illustrates a method for determining an element concentration of an EDS/WDS spectrum of an unknown sample;

Fig. 2    illustrates a method for determining a similarity score according to embodiments of the invention;

Fig. 3    illustrates a device for determining an element concentration of an EDS/WDS spectrum of an unknown sample; and

Fig. 4    illustrates a schematic system for generating an EDS/WDS spectrum of an unknown sample according to an embodiment of the invention.

**Detailed Description of the Invention**

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

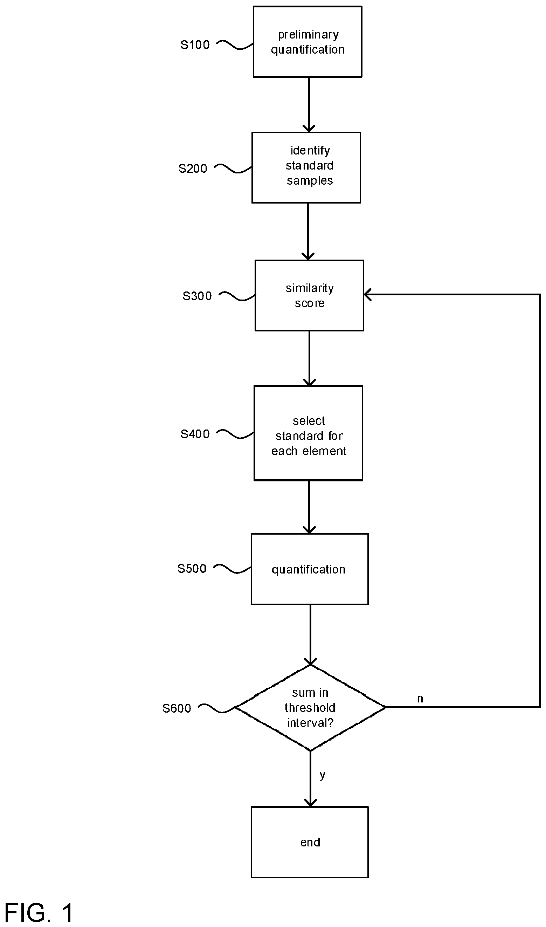

Fig. 1 illustrates a method for determining an element concentration of an unknown EDS/WDS spectrum according to an embodiment of the invention.

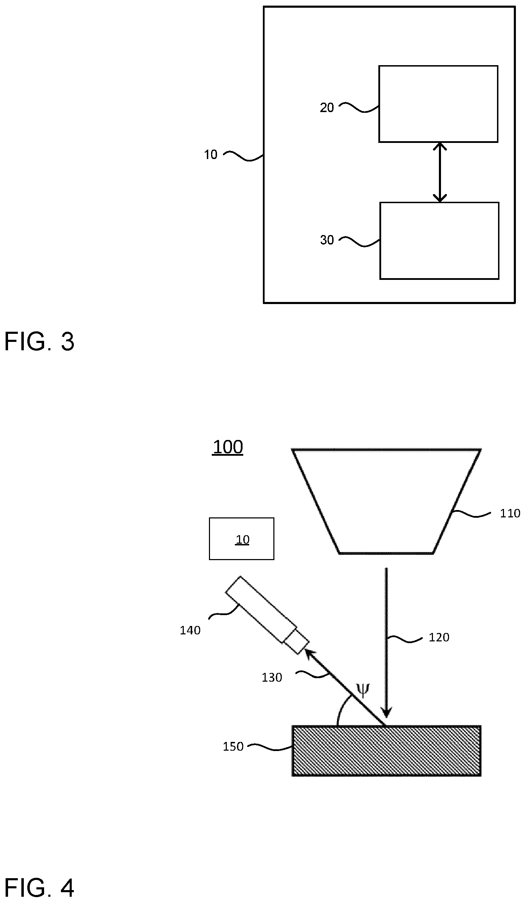

A spectrometric system 100, cf. the schematic Fig. 4, may detect energy- or wavelength dispersive secondary particles 130 as for example X-rays emitted from an unknown sample 150. The detected photons can be represented by an EDS/WDS spectrum which includes intensities (i.e. the number of photons) emitted by the unknown sample 150 according to the individual elements therein. The collected EDS/WDS spectrum thus includes information on the concentrations of the elements of the sample 150. The EDS/WDS spectrum may be obtained by a spectroscopic system 100 detecting frequencies/wavelengths emitted by the sample 140 in response to an excitation process through primary particles 120, i.e. for example electrons or X-rays. The EDS/WDS spectrum may also be a pre-stored spectrum in a storage medium to be used for quantification according to the method as explained in the following.

According to step S100 a preliminary quantification of the EDS/WDS spectrum of the unknown sample 150 is performed. The preliminary quantification also includes to identify a plurality of elements in the EDS/WDS spectrum of the sample. The identification of the elements can be performed by comparing the unknown spectrum with pre-known spectra in terms of the position, i.e. the energies and wavelengths, of the peaks therein and associate the peaks to particular elements in the sample. The comparison and the detection of the plurality of elements can be performed by an element identification algorithm. The number of elements is not restricted to a particular number and depends on the element composition of the unknown sample 150.

The quantification of the EDS/WDS spectrum includes a preliminary determination of the concentrations of the elements in the unknown sample 150. In an embodiment, the preliminary quantification of the concentrations can be performed by standardless quantification. In a standardless quantification initial concentrations are assumed or guessed and with these numbers an iteration process is executed to preliminarily determine the quantification of the EDS/WDS spectrum of the unknown sample 150. The result is a set of data including for example the preliminary concentrations of the unknown sample 150 and/or correction factors, i.e. the atomic number correction factor $Z_{u,k}$ the absorption correction factor $A_{u,k}$ and the fluorescence correction factor $F_{u,k}$ for each element k in the unknown sample 150. The standardless quantification is fast and reduces computational time.

The preliminary quantification can also be obtained by using standards, i.e., applying a standard quantification. For example, a storage may be provided in which various standards according to the elements contained in the respective sample are pre-stored. For example, various steel standards including elements of steel may be stored in the storage. Other standards may be referred to minerals, glasses, organic samples or semiconductor materials or particular subclasses thereof. The standard can be selected to reach the preliminary quantification of the EDS/WDS spectrum of the unknown sample. The result is a set of data including for example the preliminary concentrations of the unknown sample 150 and/or correction factors, i.e. the atomic number correction factor $Z_{u,k}$, the absorption correction factor $A_{u,k}$ and the fluorescence correction factor $F_{u,k}$ for each element k in unknown sample 150. For example, each of the standard samples may be used for preliminary quantification and the best result is taken as the preliminary result. In the way of standard-based quantification, a more reliable and more accurate preliminary quantification can be achieved compared to the standardless preliminary quantification.

In step S200 at least one pre-stored standard spectrum including the plurality of elements is identified. Thus, from the database, the standards including the plurality of elements are identified. For example, as shown in table 3 below, four different standard samples (steel A, B, C and D) for a steel sample including the same elements are identified. Each standard sample comprises a particular composition of elements having concentrations, i.e. mass fractions of the total mass of the sample, listed in table 3 for each steel standard. The example serves only for illustration and the invention may allow a larger number of standards for a given set of identified elements. For example, the quantification can be improved when more standards are provided for each identified element to improve the accuracy of the selections.

In step S300, for each element of the plurality of elements, a similarity score for the corresponding element in each identified standard sample is determined. The score is evaluated by a comparison process between the standard sample and the preliminarily quantified unknown sample 150 for each element. The score quantifies the similarity between each corresponding element of the standard sample and the unknown sample 150.

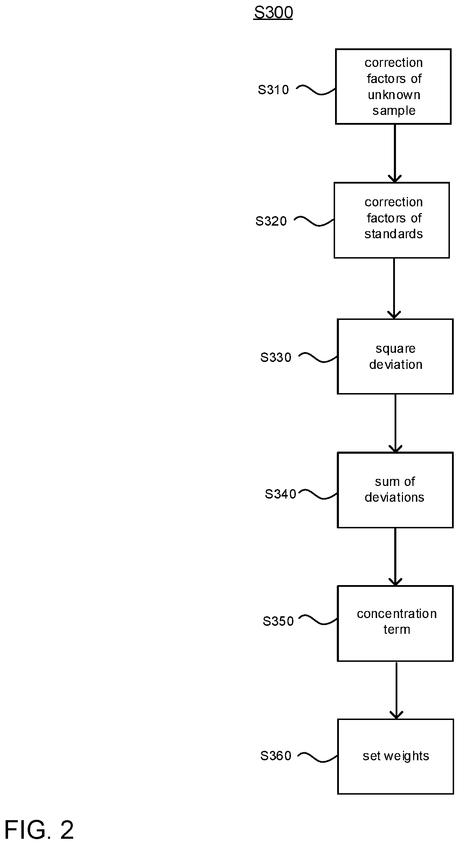

An evaluation of a particularly developed similarity score is illustrated in the description with respect to Fig. 2 as described below. In an example, cf. table 3 below, for the element Si the similarity score of the same element Si of standard steel B is better than the similarity score for standard steel D. This is indicated by the underlining of the corresponding concentration. As further example in table 3, for the element Mn in the unknown sample, the standard sample steel C has better score than steel B indicated by the underlining. Thus, the score is element-based and depends on the chosen element. For different elements of the unknown sample 150, the scores differ between the standards. The table 3 indicates the concentrations of the elements in each standard and discloses the best score for each element by underlining.

In step S400, the method includes to select, for each element of the plurality of elements, the one standard among the at least one standard sample using the calculated similarity score. Additionally, the concentration of the corresponding element in the selected standard sample is identified. Therefore, element-wise, a standard of the various standards is determined and the concentration of the corresponding element is selected.

This is illustrated in table 3 below. For example, as demonstrated in table 3, for element Mo steel A has best similarity score and thus the concentration of 1.4 is identified for the element Mo. In another example, for the elements Si, Cr, and Cu, steel B has best similarity score and the element concentrations 0.4, 16.1 and 2.0 are identified for these elements. For the elements Mn and Ni the standard steel C has the best score and the respective concentrations 3.1 and 9.9 are identified for these elements. For elements Fe and Co steel D has best similarity score and the concentrations of 50.6 and 0.03 are identified for these elements. Thus, for each element, one standard sample is selected among the plurality of standard samples which has the best score and the corresponding pre-known concentration is identified from that selected standard sample.

In step S500 quantification of the EDS/WDS spectrum of the unknown sample 150 is determined by using, for each element of the plurality of elements, the identified concentration of the respectively selected standard sample for each element. Thus, the concentrations of the best standards according to the element-wise score are used as input for the quantification process. The input concentrations are therefore not according to one of the standards but the method selects the best standards (and their concentrations) for each element to be the input for the quantification and to obtain the concentrations of the unknown sample 140. An iteration scheme can then be used, which is initialized by the identified concentration of the selected standard for each element. The result of the element concentrations is obtained, when a termination condition of the iteration process is met.

Thereby, from a set of identified standards, an optimal standard for each element, i.e. element-wise, is automatically identified by using a determined score value so that optimized concentrations are input for the quantification process. Thus, the accuracy of the quantification results is improved. The algorithm to reach the quantification results, i.e. each of the concentrations, in the last step therefore does not have to rely on a particular standard but selects element-wise the optimal standard according to the determined score.

In the following tables 1-3, the quantification results are compared between the state of the art selections (as shown in table 1 and 2) using a particular standard and the element-wise selection of standards according to the present invention in table 3.

In all tables 1-3, the spectrum is a steel sample as an example. The steel samples comprise the elements Si, Cr, Mn, Fe, Co, Ni and Mo. The values in the table refer to concentrations, i.e. mass fraction or mass concentration in % of total mass, of the respective elements. In the present example, four steel standard samples A, B, C and D are identified in the storage. The concentrations of the unknown steel refer to the result of the quantification process, cf. step S500, for the different inputs in table 1, 2 and 3. The concentrations of the target values refer to the "true" values of the sample 150 to compare the accuracy of the predictions of the quantification process.

In the comparative prior art example according to table 1, element concentrations of the standard steel A are used as input for the quantification process to determine the concentrations of the unknown sample. As can be noticed, the quantification result underestimates the concentrations of the elements. This becomes apparent from the sum of concentrations being below 100% or by comparing with the target values in table 3.

Table 1 (comparative prior art example according to a first embodiment)

| Spectrum | Si | Cr | Mn | Fe | Co | Ni | Cu | Mo | Sum |
|---|---|---|---|---|---|---|---|---|---|
| Steel A | 0.3 | 1.2 | 0.5 | 96.4 | 0.01 | 0.1 | 0.1 | 1.4 | 99.9 |
| Unknown steel | **1.0** | **17.5** | **0.9** | **65.7** | **0.01** | **6.4** | **3.4** | **0.5** | **95.4** |

In comparative prior art of table 2 the standard sample of steel D is used as input for the quantification. As can be noticed, the quantification result overestimates the concentrations of the elements. This can be derived from the sum of concentrations being above 100% or by comparing with the target values in table 3.

Table 2 (comparative prior art example according to a second embodiment)

| Spectrum | Si | Cr | Mn | Fe | Co | Ni | Cu | Mo | Sum |
|---|---|---|---|---|---|---|---|---|---|
| Steel D | 1.3 | 25.0 | 1.6 | 50.6 | 0.1 | 20.0 | 0.1 | 0.4 | 99.0 |
| Unknown steel | **1.0** | **17.8** | **1.2** | **67.5** | **0.6** | **8.8** | **6.7** | **0.5** | **104.2** |

In comparison thereto, in table 3, the underlined concentrations refer to the identified concentrations belonging to the respectively selected standard for each element. It can be noticed that the quantification for this optimized input is in particular more accurate when compared with the target values. This can be in particularly seen for the concentration predictions of the elements Co and Cu in comparison with the predictions in tables 1 and 2. Therefore, the element-wise selection of particular standards based on a similarity score of elements improves the input for the quantification process and thus also the quantification result. As such, also the predictions obtained after performing an iteration algorithm are closer to target values and therefore improve the predications quantitatively. Further, it can be noticed that the sum of concentrations is close to 100% thus reducing the problem of under- and/or overestimation.

Table 3 (example according the present invention)

| Spectrum | Si | Cr | Mn | Fe | Co | Ni | Cu | Mo | Sum |
|---|---|---|---|---|---|---|---|---|---|
| Steel A | 0.3 | 1.2 | 0.5 | 96.4 | 0.01 | 0.1 | 0.1 | _1.4_ | 99.9 |
| Steel B | _0.4_ | _16.1_ | 13.8 | 65.7 | 0.01 | 1.5 | _2.0_ | 0.0 | 99.6 |
| Steel C | 0.5 | 13.7 | _3.1_ | 72.1 | 0.01 | _9.9_ | 0.3 | 0.2 | 99.9 |
| Steel D | 1.3 | 25.0 | 1.6 | _50.6_ | _0.03_ | 20.0 | 0.1 | 0.4 | 99.0 |
| Unknown steel | 1.0 | 17.8 | **1.3** | **67.5** | **0.03** | **8.6** | **3.1** | 0.5 | **99.8** |
| Target values | 1.0 | 18.0 | 1.2 | 67.6 | 0.09 | 8.6 | 2.8 | 0.5 | 99.7 |

The method further allows to define an acceptance criterion and a recursive improvement of the quantification result.

After the step of performing the quantification S500 of the EDS/WDS spectrum of the unknown sample 150 is determined, in step of S600 the sum of concentrations of the elements of the quantification result is calculated. The quantification is accepted, when the sum of concentrations is within a threshold interval, e.g. set to [98, 102] around 100%. Thus, an acceptance criterion is used to ensure the quality of the quantification result. In the above case, the sum is 99.8 which results in acceptance according to above criterion.

In case the sum of concentrations is not within said threshold interval, the method may recursively adjust weights of the similarity score and repeat the steps of S300, S400 and S500 until the sum of concentrations of the elements of the quantification result lies within the threshold interval around 100%. Changing weight factors in a controlled way may result in a slightly different selection of standards for example for one element so that the sum of concentrations may be improved. The weight factors will be explained below for a particular similarity score and thus allow recurrence to ensure an accurate quantification result of concentrations. The recurrence can be automatically implemented.

Fig. 2 illustrates a preferred method for determining a similarity score according to embodiments of the invention. This similarity score designed by the applicant is particularly accurate and has turned out to be particularly successful for accurate selection of the concentrations in the various standards resulting in accurate quantification predictions.

In step 310, the method comprises to determine S310 an atomic number correction factor $Z_{u,k}$, an absorption correction factor $A_{u,k}$ and a fluorescence correction factor $F_{u,k}$ for each element k of the preliminarily quantified unknown sample. The determination process may be part of the preliminary quantification performed in step S100.

In step S320 the same correction factors are determined, i.e. the atomic number correction factor $Z_{s,k}$, the absorption correction factor $A_{s,k}$ and the fluorescence correction factor $F_{s,k}$, for each element k of the plurality of elements of the identified standards. In this case, the correction factors may be pre-known data for each of the standard sample and pre-stored together with the standard in a storage.

In a further step S330, the method comprises, for each element, calculating a square deviation between the determined correction factor of the element of the unknown sample and the corresponding correction factor of the corresponding element of one of the standard samples.

The method further comprises calculating S340 a sum of square deviations between the respective correction factors $Z_{u,k}$, $A_{u,k}$ and $F_{u,k}$ of the element of the unknown sample and the respective correction factors $Z_{s,k}$, $A_{s,k}$ and $F_{s,k}$ of the standard sample. The developed square deviation score used in the present case is designed to not cancel out in contrast to the matrix correction which is a product of the correction factors. In this sense, a superior measure is provided to improve the accuracy. The correction factors obtain as well information on the concentration of the element k and all other concentrations in the sample and is therefore a good measure to perform an accurate element-based selection process.

To even further improve the selection criterion, the correction factors can also be combined with the concentration of the corresponding element in the standard sample. It has been shown particularly accurate, when a term log ($c_{s,k}$) is calculated and the term is subtracted from the calculated (sum of) square deviations. The concentration $c_{s,k}$ corresponds to the concentration of the element k in the standard sample. The term is based on the insight that small concentrations in the standard to larger concentration are less reliable and that the statistical error of the peak in the spectrum is smaller for larger concentrations. Therefore, an improved similarity score is provided since very small concentrations become unlikely due to the behavior of the log-function for small $c_{s,k}$.

The terms can also be weighted with respect to each other, the determining of the similarity score include setting of weights between the calculated term log ($c_{s,k}$) and the calculated (sum of) square deviation. The weights can be represented in the following formula developed by the applicant:

$$S = w_1 \cdot [(Z_{u,k} - Z_{s,k})^2 + (A_{u,k} - A_{s,k})^2 + (F_{u,k} - F_{s,k})^2] - w_2 \cdot \log c_{s,k},$$

wherein $w_1 > 0$ refers to a preset first weight factor, $w_2 > 0$ refers to a preset second weight factor. This similarity score includes all above reported said benefits and thus provides an improved similarity score compared to other previously used similarity scores.

As was already presented above, the weight factors can be used to iteratively perform the quantification when the sum of concentrations of the quantification result has turned out to be within a (narrow) threshold, e.g. [98, 102] around 100% by successive adaption of the weights of the similarity score to improve the selection of concentrations of the standards in this manner. This was already described above with respect to the step of S600 and it is herewith referred to the above description.

Fig. 3 illustrates a schematic device 10 for determining an element concentration of an EDS/WDS spectrum of an unknown sample. The device comprises at least one processor 20 and a storage 30 that is operatively connected to the processor 20. The storage 30 includes the standard samples and further data, for example the correction factors of the elements of the $Z_{s,k}$, $A_{s,k}$ and $F_{s,k}$ of the elements in the standard sample. The processor 20 is configured to perform the method as described above with respect to Figs. 1 and 2.

Fig. 4 shows a schematic view of a spectroscopic system 100 for generating an EDS/WDS spectrum of a sample 150. The system 100 includes a device 10 for determining an element concentration of an EDS/WDS spectrum of the sample 150 as described above. The device 10 may receive the EDS/WDS spectrum as input. A sample holder may be provided on which the sample 150 is secured. The sample 150 may be a homogeneous material, for which the concentration composition of the elements therein is to be quantified.

The system 100 may comprise an aperture 110 to locally excite the sample 150 via primary particles 120, e. g. via an electron beam or via radiation, and a detector 140 to record the secondary particles 130, i.e. an X-ray response, from the sample 150. The detector 140 is provided to locally record the outputted response from the particular elements of the sample 150. The aperture 110 is in top position with respect to the sample 150 as indicated but for example may also be inclined and/or positioned sideways with respect to the sample 150. The detector 140 is inclined and/or positioned sideways with respect to the sample 150.

The device 10 for determining an element concentration 10 may receive and/or generate the spatially resolving EDS/WDS spectrum based on the recorded data of the sample 150 by the detector 140. The processor can quantify the EDS/WDS spectrum with improved accuracy. The system 100 may share all the advantages as described above for the corresponding method.

**Reference signs**

| | |
|---|---|
| 10 | device |
| 20 | processor |
| 30 | storage |
| 100 | spectroscopic system |
| 110 | aperture |
| 120 | primary particles |
| 130 | secondary particles |
| 140 | detector |
| 150 | sample |
| S100 | preliminary quantification |
| S200 | identify standard sample |

S300  determine similarity score
S400  select standard for each element
S500  quantification of the sample
S600  calculate sum of concentrations
S310  determine correction factors of sample of unknown composition
S320  identify correction factors of sample of unknown composition
S330  calculated square deviation
S340  calculate sum of square deviations
S350  calculate concentration term
S360  set weights for summation


**Claims**

1.  A computer-implemented method for determining an element concentration of an EDS/WDS spectrum of an unknown sample, comprising the steps of:

    perform a preliminary quantification (S100) of the EDS/WDS spectrum of the unknown sample and identify a plurality of elements in the unknown sample;
    identify (S200) a set of pre-stored standard samples including the plurality of elements;

    **characterized in**,

    determine (S300), for each element of the plurality of elements, a similarity score for the corresponding element in each identified standard sample;
    select (S400), for each element of the plurality of elements, the one standard sample among the set of standard samples by using the determined similarity score and identify the concentration of the corresponding element in the selected standard sample; and
    perform quantification (S500) of the EDS/WDS spectrum of the unknown sample by using, for each element of the plurality of elements, the identified concentration of the respectively selected standard sample.

2.  The method for claim 1, wherein the determining the similarity score comprises the steps of:

    determine (S310) at least one among an atomic number correction factor $Z_{u,k}$, an absorption correction factor $A_{u,k}$ and a fluorescence correction factor $F_{u,k}$ for each element of the plurality of elements of the preliminarily quantified unknown sample;
    determine (S320) the same one among the atomic number correction factor $Z_{s,k}$, the absorption correction factor $A_{s,k}$ and the fluorescence correction factor $F_{s,k}$, for the corresponding elements of the identified standards; and
    calculating (S330), for each element of the plurality of elements, a square deviation between the determined correction factor of the element of the unknown sample and the corresponding one of the standard sample.

3.  The method for claim 2, wherein determining the similarity score comprises calculating (S340) a sum of square deviations between the respective correction factors $Z_{u,k}$, $A_{u,k}$ and $F_{u,k}$ of the element of the unknown sample and the respective correction factors $Z_{s,k}$, $A_{s,k}$ and $F_{s,k}$ of the standard sample.

4.  The method for one of the claims 2 and 3, wherein the determining of the similarity score further includes using the concentration of the element in the standard sample.

5.  The method for claim 4, wherein determining the similarity score further includes calculating (S350) a term log ($c_{s,k}$) and subtracting the term from the calculated square deviation, wherein $c_{s,k}$ corresponds to the concentration of the element in the standard sample.

6.  The method for claim 5, wherein determining the similarity score includes setting (S360) a relative weight between the calculated term log ($c_{s,k}$) and the calculated square deviation.

7.  The method for claim 6, wherein determining the similarity score includes calculating the term:

$$S = w_1 \cdot [(Z_{u,k} - Z_{s,k})^2 + (A_{u,k} - A_{s,k})^2 + (F_{u,k} - F_{s,k})^2] - w_2 \cdot \log c_{s,k},$$

wherein $w_1 > 0$ refers to a preset first weight factor, $w_2 > 0$ refers to a preset second weight factor.

8.  The method for one of the claims 1 to 7, wherein the step of performing the preliminary quantification includes a standardless quantification in which concentrations are initially assumed and iterated to reach the preliminary quantification of the EDS/WDS spectrum of the unknown sample.

9.  The method for one of the claims 1 to 7, wherein the step of performing the preliminary quantification includes a standard quantification in which concentrations according to a standard sample are selected and iterated to reach the preliminary quantification of the EDS/WDS spectrum of the unknown sample.

10. The method for one of the claims 1 to 9, wherein after the step of performing quantification (S500) of the EDS/WDS spectrum of the unknown sample, the method comprises the step of determining the sum of concentrations (S600) of the elements of the quantification result, and accept the quantification result, when the sum of concentrations is within a threshold interval around 100%.

11. The method for claim 10, when dependent on claims 6 or 7, wherein the method comprises to repeat the steps of S300, S400 and S500 for adjusted weights, when the sum of concentrations is not within a threshold interval around 100% until the sum of concentrations of the elements of the quantification result is within the threshold interval around 100%.

12. A computer program comprising instructions which, when executed by a computer, cause the computer to carry out the method for claims 1 to 11.

13. A device (10) for determining an element concentration of an EDS/WDS spectrum of a sample, comprising at least one processor (20) operatively connected to a storage (30), wherein the at least one processor (20) is configured to perform the method for one of the claims 1 to 11.

14. A spectroscopic system (100) for obtaining an EDS/WDS spectrum of an unknown sample, the system (100) including a device (10) according to claim 13.

**Patentansprüche**

1.  Computerimplementiertes Verfahren zur Bestimmung einer Elementkonzentration eines EDS/WDS-Spektrums einer unbekannten Probe, das die folgenden Schritte umfasst:

    Durchführen einer vorläufigen Quantifizierung (S100) des EDS/WDS-Spektrums der unbekannten Probe und Ermitteln einer Mehrzahl von Elementen in der unbekannten Probe;
    Ermitteln (S200) eines Satzes vorab gespeicherter Standardproben, die die Mehrzahl von Elementen umfassen;

    **gekennzeichnet durch**

    Bestimmen (S300) eines Ähnlichkeitsscores für das entsprechende Element in jeder ermittelten Standardprobe für jedes Element der Mehrzahl von Elementen;
    Auswählen (S400) der einen Standardprobe in dem Satz von Standardproben für jedes Element der Mehrzahl von Elementen unter Verwendung des bestimmten Ähnlichkeitsscores und Identifizieren der Konzentration des entsprechenden Elements in der ausgewählten Standardprobe; und
    Durchführen der Quantifizierung (S500) des EDS/WDS-Spektrums der unbekannten Probe für jedes Element der Mehrzahl von Elementen unter Verwendung der ermittelten Konzentration der jeweils ausgewählten Standardprobe.

2.  Verfahren nach Anspruch 1, wobei das Bestimmen des Ähnlichkeitsscores die folgenden Schritte umfasst:

    Bestimmen (S310) von mindestens einem aus einem Atomzahlkorrekturfaktor $Z_{u,k}$, einem Absorptionskorrekturfaktor $A_{u,k}$ und einem Fluoreszenzkorrekturfaktor $F_{u,k}$ für jedes Element der Mehrzahl von Elementen der vorläufig quantifizierten unbekannten Probe;
Bestimmen (S320) von demselben aus dem Atomzahlkorrekturfaktor $Z_{u,k}$, dem Absorptionskorrekturfaktor $A_{u,k}$ und dem Fluoreszenzkorrekturfaktor $F_{u,k}$ für die entsprechenden Elemente der ermittelten Standards; und
Berechnen (S330) einer Quadratabweichung zwischen dem bestimmten Korrekturfaktor des Elements der unbekannten Probe und dem entsprechenden der Standardprobe für jedes Element der Mehrzahl von Elementen.

3. Verfahren nach Anspruch 2, wobei das Bestimmen des Ähnlichkeitsscores das Berechnen (S340) einer Summe von Quadratabweichungen zwischen den jeweiligen Korrekturfaktoren $Z_{u,k}$, $A_{u,k}$ und $F_{u,k}$ des Elements der unbekannten Probe und den jeweiligen Korrekturfaktoren $Z_{s,k}$, $A_{s,k}$ und $F_{s,k}$ der Standardprobe umfasst.

4. Verfahren nach einem der Ansprüche 2 und 3, wobei das Bestimmen des Ähnlichkeitsscores ferner das Verwenden der Konzentration des Elements in der Standardprobe umfasst.

5. Verfahren nach Anspruch 4, wobei das Bestimmen des Ähnlichkeitsscores ferner das Berechnen (S350) eines Term-Logarithmus ($c_{s,k}$) und das Subtrahieren des Terms von der berechneten Quadratabweichung umfasst, wobei $c_{s,k}$ der Konzentration des Elements in der Standardprobe entspricht.

6. Verfahren nach Anspruch 5, wobei das Bestimmen des Ähnlichkeitsscores das Einstellen (S360) einer relativen Gewichtung zwischen dem berechneten Term-Logarithmus ($c_{s,k}$) und der berechneten Quadratabweichung umfasst.

7. Verfahren nach Anspruch 6, wobei das Bestimmen des Ähnlichkeitsscores das Berechnen des folgenden Terms umfasst:

$$S = w_1 \cdot [(Z_{u,k} - Z_{s,k})^2 + (A_{u,k} - A_{s,k})^2 + (F_{u,k} - F_{s,k})^2] - w_2 \cdot \log c_{s,k},$$

wobei $w_1 > 0$ sich auf einen vorgegebenen ersten Gewichtungsfaktor bezieht und $w_2 > 0$ sich auf einen vorgegebenen zweiten Gewichtungsfaktor bezieht.

8. Verfahren nach einem der Ansprüche 1 bis 7, wobei der Schritt des Durchführens der vorläufigen Quantifizierung eine standardfreie Quantifizierung umfasst, bei der Konzentrationen zunächst angenommen und iteriert werden, um die vorläufige Quantifizierung des EDS/WDS-Spektrums der unbekannten Probe zu erreichen.

9. Verfahren nach einem der Ansprüche 1 bis 7, wobei der Schritt des Durchführens der vorläufigen Quantifizierung eine Standardquantifizierung umfasst, bei der Konzentrationen gemäß einer Standardprobe ausgewählt und iteriert werden, um die vorläufige Quantifizierung des EDS/WDS-Spektrums der unbekannten Probe zu erreichen.

10. Verfahren nach einem der Ansprüche 1 bis 9, wobei das Verfahren nach dem Schritt des Durchführens der Quantifizierung (S500) des EDS/WDS-Spektrums der unbekannten Probe den Schritt des Bestimmens der Summe der Konzentrationen (S600) der Elemente des Quantifizierungsergebnisses und des Annehmens des Quantifizierungsergebnisses, wenn die Summe der Konzentrationen innerhalb eines Schwellenintervalls um 100 % herum liegt, umfasst.

11. Verfahren nach Anspruch 10, wenn abhängig von den Ansprüchen 6 oder 7, wobei das Verfahren das Wiederholen der Schritte S300, S400 und S500 für angepasste Gewichtungen umfasst, wenn die Summe der Konzentrationen nicht innerhalb eines Schwellenintervalls um 100 % herum liegt, bis die Summe der Konzentrationen der Elemente des Quantifizierungsergebnisses innerhalb des Schwellenintervalls um 100 % herum liegt.

12. Computerprogramm, das Anweisungen umfasst, die bei Ausführung durch einen Computer bewirken, dass der Computer das Verfahren nach den Ansprüchen 1 bis 11 durchführt.

13. Vorrichtung (10) zur Bestimmung einer Elementkonzentration eines EDS/WDS-Spektrums einer Probe, die mindestens einen mit einem Speicher (30) wirkverbundenen Prozessor (20) umfasst, wobei der mindestens eine Prozessor (20) dazu ausgestaltet ist, das Verfahren nach einem der Ansprüche 1 bis 11 durchzuführen.

14. Spektroskopiesystem (100) zum Erhalten eines EDS/WDS-Spektrums einer unbekannten Probe, wobei das System (100) eine Vorrichtung (10) nach Anspruch 13 umfasst.

**Revendications**

1. Procédé mis en oeuvre par ordinateur destiné à la détermination de la concentration d'un élément à partir d'un spectre EDS/WDS d'un échantillon inconnu, comprenant les étapes de :

   réalisation d'une quantification préliminaire (S100) à partir du spectre EDS/WDS de l'échantillon inconnu et identification d'une pluralité d'éléments dans l'échantillon inconnu ;
   identification (S200) d'un ensemble d'échantillons standards pré-enregistrés comportant la pluralité d'éléments ;

   **caractérisé par**

   la détermination (S300), pour chaque élément de la pluralité d'éléments, d'un score de similarité pour l'élément correspondant dans chaque échantillon standard identifié ;
   la sélection (S400), pour chaque élément de la pluralité d'éléments, de l'échantillon standard parmi l'ensemble d'échantillons standards au moyen du score de similarité déterminé et l'identification de la concentration de l'élément correspondant dans l'échantillon standard sélectionné ; et
   la réalisation d'une quantification (S500) à partir du spectre EDS/WDS de l'échantillon inconnu au moyen de, pour chaque élément de la pluralité d'éléments, la concentration identifiée de l'échantillon standard respectivement sélectionné.

2. Procédé selon la revendication 1, dans lequel la détermination du score de similarité comprend les étapes de :

   détermination (S310) d'au moins un facteur parmi un facteur de correction de numéro atomique $Z_{u,k}$, un facteur de correction d'absorption $A_{u,k}$ et un facteur de correction de fluorescence $F_{u,k}$ pour chaque élément de la pluralité d'éléments de l'échantillon inconnu préliminairement quantifié ;
   détermination (S320) du même facteur parmi le facteur de correction de numéro atomique $Z_{s,k}$, le facteur de correction d'absorption $A_{s,k}$ et le facteur de correction de fluorescence $F_{s,k}$ pour les éléments correspondants des standards identifiés ; et
   calcul (S330), pour chaque élément de la pluralité d'éléments, d'un écart quadratique entre le facteur de correction déterminé de l'élément de l'échantillon inconnu et le facteur correspondant de l'échantillon standard.

3. Procédé selon la revendication 2, dans lequel la détermination du score de similarité comprend le calcul (S340) d'une somme d'écarts quadratiques entre les facteurs de correction $Z_{u,k}$, $A_{u,k}$ et $F_{u,k}$ respectifs de l'élément de l'échantillon inconnu et les facteurs de correction $Z_{s,k}$, $A_{s,k}$ et $F_{s,k}$ respectifs de l'échantillon standard.

4. Procédé selon l'une des revendications 2 et 3, dans lequel la détermination du score de similarité comporte en outre l'utilisation de la concentration de l'élément dans l'échantillon standard.

5. Procédé selon la revendication 4, dans lequel la détermination du score de similarité comporte en outre le calcul (S350) d'un log de terme ($c_{s,k}$) et la soustraction du terme de l'écart quadratique calculé, $c_{s,k}$ correspondant à la concentration de l'élément dans l'échantillon standard.

6. Procédé selon la revendication 5, dans lequel la détermination du score de similarité comporte le réglage (S360) d'une pondération relative entre le log de terme ($c_{s,k}$) calculé et l'écart quadratique calculé.

7. Procédé selon la revendication 6, dans lequel la détermination du score de similarité comporte le calcul du terme :

$$S \ = \ w_1 \cdot \ [(Z_{u,k} \ - \ Z_{s,k})^2 \ + \ (A_{u,k} \ - \ A_{s,k})^2 \ + \ (F_{u,k} \ - \ F_{s,k})^2] \ - \ w_2 \cdot \log c_{s,k},$$

dans lequel $w_1 > 0$ se réfère à un premier coefficient de pondération préréglé, $w_2 > 0$ se réfère à un second coefficient de pondération préréglé.

8. Procédé selon l'une des revendications 1 à 7, dans lequel l'étape de réalisation de la quantification préliminaire comporte une quantification sans standard dans laquelle des concentrations sont initialement supposées et itérées pour obtenir la quantification préliminaire à partir du spectre EDS/WDS de l'échantillon inconnu.

9. Procédé selon l'une des revendications 1 à 7, dans lequel l'étape de réalisation de la quantification préliminaire comporte une quantification standard dans laquelle des concentrations selon un échantillon standard sont sélectionnées et itérées pour obtenir la quantification préliminaire à partir du spectre EDS/WDS de l'échantillon inconnu.

10. Procédé selon l'une des revendications 1 à 9, dans lequel, après l'étape de réalisation de la quantification (S500) à partir du spectre EDS/WDS de l'échantillon inconnu, le procédé comprend l'étape de détermination de la somme des concentrations (S600) des éléments du résultat de la quantification et d'acceptation du résultat de quantification quand la somme des concentrations est comprise dans un intervalle seuil autour de 100 %.

11. Procédé selon la revendication 10, quand elle dépend des revendications 6 ou 7, dans lequel le procédé comprend la répétition des étapes S300, S400 et S500 pour des pondérations ajustées quand la somme des concentrations n'est pas comprise dans un intervalle seuil autour de 100 % jusqu'à ce que la somme des concentrations des éléments du résultat de quantification soit comprise dans l'intervalle seuil autour de 100 %.

12. Programme informatique comprenant des instructions qui, quand elles sont exécutées par un ordinateur, amènent l'ordinateur à exécuter le procédé selon les revendications 1 à 11.

13. Dispositif (10) de détermination de la concentration d'un élément à partir d'un spectre EDS/WDS d'un échantillon, comprenant au moins un processeur (20) relié de manière fonctionnelle à une mémoire (30), dans lequel l'au moins un processeur (20) est configuré pour effectuer le procédé selon l'une des revendications 1 à 11.

14. Système spectroscopique (100) servant à obtenir un spectre EDS/WDS d'un échantillon inconnu, le système (100) comportant un dispositif (10) selon la revendication 13.

FIG. 1

16

S300

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NEWBURY DALE E.** Standardless Quantitative electron-excited X-Ray Microanalysis by energy-dispersive spectrometry: What is its proper role?. *Microscopy and Microanalysis,* November 1998, vol. 4 (6), ISSN 1431-9276, 585-597